# EUROPÄISCHE PATENTANMELDUNG

(11) **EP 0 826 724 A1**
(43) Veröffentlichungstag der Anmeldung: **04.03.1998**
(21) Anmeldenummer: 97114235.1
(22) Anmeldetag: 18.08.1997
(51) Int. Cl.: C08K 5/134, C08L 59/00

(54) **Verfahren zum Stabilisieren von POM mit einem sterisch gehinderten Phenolester des Diethylenglykols**

(30) Priorität: 31.08.1996 DE 19635381
(71) Anmelder: Degussa Aktiengesellschaft, 60311 Frankfurt (DE)
(72) Erfinder: Keller, Bruno, Dr., 55263 Wackernheim (DE); Schauhoff, Stephanie, Dr., 60385 Frankfurt (DE); Dorn, Klaus, Dr., 63457 Hanau (DE); Alt, Hartmut, 63636 Brachttal (DE); Michelchen, Dietrich, 63526 Erlensee (DE)

(57) **Zusammenfassung**

Verfahren zum Stabilisieren von POM, das üblicherweise der oxidativen Zersetzung unterliegt, gekennzeichnet durch die Vermischung von POM mit einer wirksamen Menge eines sterisch gehinderten Phenolesters eines Dialkylenglykols der allgemeinen Formel I

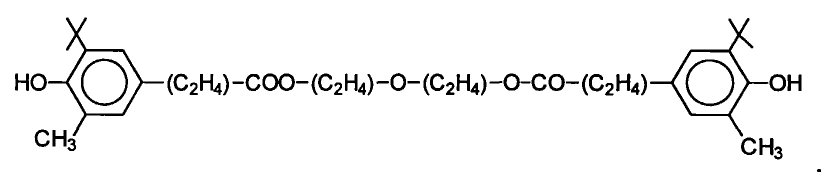

## Beschreibung

Die Erfindung richtet sich auf ein Verfahren zum Stabilisieren von organischem Material, das üblicherweise der oxidativen Zersetzung unterliegt. Insbesondere betrifft die Erfindung ein solches Verfahren, bei welchem als organisches Material thermoplastisches POM gegen oxidative Zersetzung stabilisiert wird, wobei dies durch Vermischung des POM mit einer wirksamen Menge eines bestimmten sterisch gehinderten Phenolesters eines Diethylenglykols geschieht.

Aus der GB-PS 996 502 bzw. der US-PS 3,497,549 ist bekannt, organische Materialien mit sterisch gehinderten Phenolestern von Mono- oder Dialkylenglykolen zu stabilisieren.

Die genannten Schriften offenbaren sterisch gehinderte Phenolester der allgemeinen Formel 1 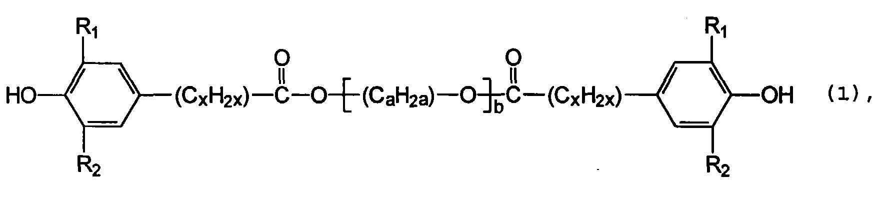 worin
- b: 1 oder 2 und
- R₁ sowie R₂: tert.-Butylgruppen
bedeuten.

Aus der DE-PS 21 33 374 sind sterisch gehinderte Phenolester von Polyalkylenglykolen der allgemeinen Formel 1 bekannt,
worin
- a: 2 bis 4,
- b: 3 bis 28,
- R₁: eine Alkylgruppe mit 1 bis 8 Kohlenstoffatomen,
- R₂: Wasserstoff oder eine Alkylgruppe mit 1 bis 8 Kohlenstoffatomen und
- x: 0 bis 6
sind.

Ferner offenbart die DE-PS 21 33 374, daß die entsprechenden Ester von Polyalkylenglykolen eine bessere stabilisierende Wirkung zeigen als die Ester der Mono- oder Dialkylenglykole, wie sie in der GB-PS 996 502 bzw. in der US-PS 3,497,549 beschrieben sind.

Die US 3,644,482 schließlich beschreibt das Antioxidans Ethylenglykol-bis-[3-[3-(tert.-butyl)-4-hydroxy-5-methylphenyl]-propionat].

Es wurde nun ein Verfahren gemäß der eingangs genannten Art gefunden, welches gekennzeichnet ist durch die Vermischung des POM mit einer wirksamen Menge eines sterisch gehinderten Phenolesters des Diethylenglykols der Formel I

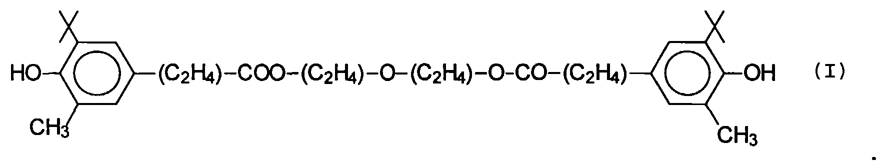

Hierbei überraschte vor allem, daß entgegen der Aussage der DE-PS 21 33 374 Mono- oder Dialkylenglykole sehr wohl über bessere Stabilisierungseigenschaften verfügen als die Polyalkylenglykole gemäß der genannten Patentschrift, sofern die beiden Phenylreste nicht 3,5-Di-tert.-Butyl substituiert sind, sondern nur genau einer der beiden Reste R₁ oder R₂ in der allgemeinen Formel 1 eine tert.-Butylgruppe ist, während der andere eine Alkylgruppe mit einem Kohlenstoffatom darstellt.

Insbesondere wird mit dem erfindungsgemäßen unsymmetrisch an den Phenylgruppen substituierten sterisch gehinderten Phenolester eines Dialkylenglykols ein besonders ausgewogenes Eigenschaftsspektrum erreicht, was sich u. a. in einer besonders günstigen Beeinflussung der thermischen Stabilität von zu stabilisierenden organischen Materialien, einem besonders günstigen Einfluß auf die Verfärbung bei Wärmelagerung und einem besonders günstigen Einfluß auf den MVR (melt viscosity range) zeigt.

Die im erfindungsgemäßen Verfahren einsetzbare phenolische Esterverbindung ist nützlich als Stabilisator von organischen Materialien, die üblicherweise der oxidativen Zersetzung unterliegen. Solche Materialien schließen im Rahmen der Erfindung Polyacetale (POM) ein.

Die im erfindungsgemäßen Verfahren nützliche Verbindung ist literaturbekannt und kann aus den entsprechenden Säuren, Säurechloriden oder niedrigen Alkylestern und Glykolen unter Verwendung an sich bekannter Veresterungsverfahren hergestellt werden. Die Ausgangsmaterialien zur Herstellung der erfindungsgemäßen Verbindung sind im Handel erhältlich und/oder können gemäß dem Fachmann geläufigen Verfahren hergestellt werden.

Im allgemeinen wird der erfindungsgemäß einsetzbare Stabilisator in Mengen von etwa 0,005 bis etwa 5 Gew.-% der Zusammensetzung eingesetzt. Ein besonders bevorzugter Bereich für Polyacetale (POM) liegt im Bereich von etwa 0,05 % bis etwa 2 %, wobei ein Bereich von etwa 0,1 % bis etwa 1,0 % am meisten bevorzugt ist.

Der im erfindungsgemäßen Sinne einsetzbare Stabilisator kann alleine oder zusammen mit anderen Stabilisatoren oder Zusatzstoffen bzw. zugefügten Materialien eingesetzt werden. Besonders günstige Stabilisatorpakete für Polyoxymethylen-Formmassen ergeben sich beispielsweise in gemeinsamer Anwendung mit thermischen Stabilisatoren, Costabilisatoren sowie Nukleierungsmitteln, wie beispielsweise einem Melamin-Formaldehydkondensat gemäß DE-PS-25 40 207.

Ein Beispiel für einen thermischen Stabilisator ist das unter der Bezeichnung Ultramid® 1 C von der BASF Aktiengesellschaft vertriebene Produkt.

Ein Beispiel für einen Costabilisator ist das unter der Bezeichnung Ambosol® 500 von der Hoechst Aktiengesellschaft vertriebene Produkt.

Weiterhin bevorzugte Zusatzstoffe dienen zum Abfangen von Formaldehyd (Formaldehyd-Scavenger), sind Weichmacher, Schmiermittel, Haftvermittler, Lichtstabilisatoren und Pigmente.

Die Zuschlagstoffe werden vorteilhafterweise in feingemahlener Form eingesetzt. Produkte mit einer durchschnittlichen Teilchengröße von kleiner als 100 µm, vorzugsweise von kleiner als 50 µm, sind besonders gut geeignet.

Als Zuschlagstoff können auch Mengen eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z. B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge Von 0,05 bis 1 mm, insbesondere 0,1 bis 0,5 mm aufweisen.

Andere geeignete zusätzliche Füllstoffe sind beispielsweise Wollastonit, Calciumcarbonat, Glaskugeln, Quarzmehl, Si- und Bornitrid oder Mischungen dieser Füllstoffe.

Bevorzugte Kombinationen von Füllstoffen sind: Wollastonit mit Glasfasern, wobei Mischungsverhältnisse von 5 : 1 bis 1 : 5 bevorzugt sind.

Die genannten Zusatzstoffe können in den unterschiedlichsten Mengen vorhanden sein, wobei sich im Einzelfall die betreffende Menge des jeweils verwendeten Zusatzstoffs danach richtet, welchen speziellen nützlichen technischen Effekt man hiermit erzielen will. Zweckmäßigerweise werden die Zusatzstoffe in den vom Stand der Technik her bekannten üblichen Mengen verwendet, wobei Mengen von 0,01 bis 40 Gew.-%, bezogen auf das Gewicht der zu stabilisierenden thermoplastischen Kunststoffe oder der gesamten Formmasse, besonders vorteilhaft sind.

Andere Antioxidantien, Mittel gegen Ozon, , Absorbentien für ultraviolettes Licht, färbende Materialien, Farbstoffe, Pigmente, Metallchelatmittel usw. können im Verfahren der Erfindung zusammen mit den Verbindungen gemäß der Formel I verwendet werden.

Gegenstand der Erfindung ist auch die Verwendung einer Verbindung der allgemeinen Formel I 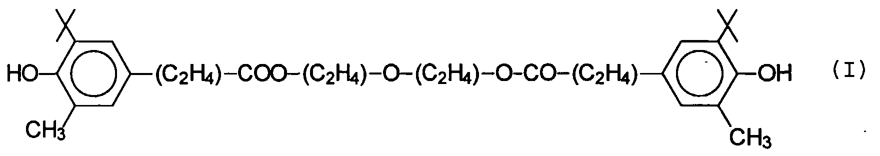 zum Stabilisieren von organischem Material, das üblicherweise der oxidativen Zersetzung unterliegt, ggf. zusammen mit bekannten Stabilisatoren, insbesondere von Polyacetalen (POM).

Die folgenden Beispiele und Vergleichsbeispiele sollen zur eingehenden Erläuterung der Erfindung dienen:
1) Beschreibung der Einsatzstoffe
   Ethylenglykol z. Synth. (Merck, Darmstadt)
   Diethylenglykol z. Synth. (Merck, Darmstadt)
   Triethylenglykol z. Synth. (Merck, Darmstadt)
   p-Toluolsulfonsäure p.a. (Merck, Darmstadt)
   Toluol p.a. (Merck, Darmstadt)
   Natriumcarbonat p.a. (Merck, Darmstadt)
   Irganox® 245 FF (Ciba Geigy, Basel), Triethylenglykol-bis-[3-(3-(tert.-butyl)-4-hydroxy-5-methylphenyl]-propionat],
      CAS-Nr. [36443-68-2]
   3,5-Di-(tert.-butyl)-4-Hydroxyphenyl]-propionsäure (Ciba Geigy, Basel)
   3-(tert.-Butyl)-4-hydroxy-5-methylphenyl]-propionsäure (Ciba Geigy, Basel)
2) Synthesen, Probenherstellung und Prüfverfahren

### Beispiel 1 (B1)

### Diethylenglykol-bis-[3-[3-(tert.-butyl)-4-hydroxy-5-methylphenyl]-propionat] CAS-Nr. [101465-83-2]

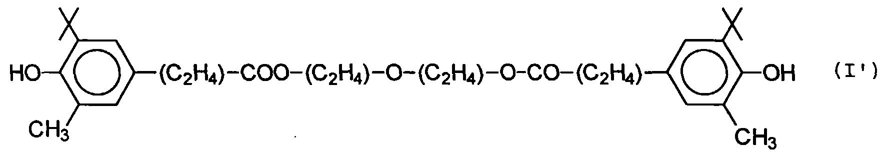

23,6 g (0,1 mol) 3-(tert.-Butyl)-4-hydroxy-5-methylphenyl]-propionsäure und 5,4 g (0,05 mol) Diethylenglykol und 0,6 g p-Toluolsulfonsäure (p-TSOH) wurden zusammen in 150 ml Toluol zwei Stunden unter Rückfluß erhitzt, bis 1,4 g Wasser abgeschieden waren. Dann wurde mit 0,3 g p-TSOH nachkatalysiert und weitere 3 Stunden am Rückfluß gekocht. Insgesamt wurden 1,5 g Wasser gesammelt. Die Reaktionsmischung wird auf Raumtemperatur abgekühlt und zweimal mit je 100 ml 5%iger Sodalösung ausgeschüttelt und anschließend mit Wasser neutral gewaschen. Die Toluolphase wurde über Natriumsulfat getrocknet, filtriert und das Lösungsmittel unter vermindertem Druck entfernt.
Ausbeute: 27,2 g viskoses Produkt.
¹H-NMR: Struktur bestätigt

### Vergleichsbeispiel 2 (V2)

### Ethylenglykol-bis-[3-[3-(tert.-butyl)-4-hydroxy-5-methylphenyl]-propionat]

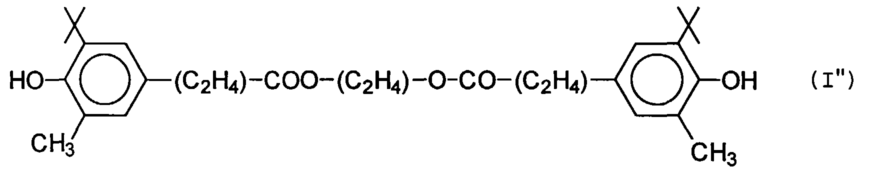

Es wurde im wesentlichen wie in Beispiel 1 verfahren, nur daß Ethylenglykol anstelle des Diethylenglykols verwendet wurde.
Ausbeute: 24,6 g kristallines Produkt
¹H-NMR: Struktur bestätigt

### Vergleichsbeispiel 3 (V3)

### Irganox 245 FF (Ciba Geigy, Basel) Triethylenglykol-bis-[3-(3-(tert.-butyl)-4-hydroxy-5-methylphenyl]-propionat], CAS-Nr. [36443-68-2]

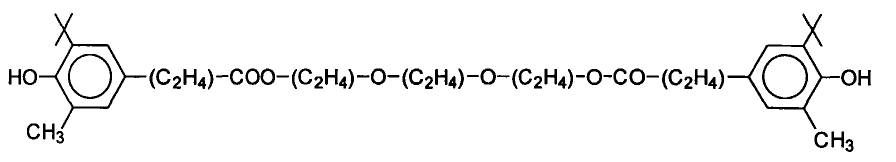

### Vergleichsbeispiel 4 (V4)

### Triethylenglykol-bis-[3-(3,5-di-(tert.-butyl)-4-hydroxyphenyl]-propionat]

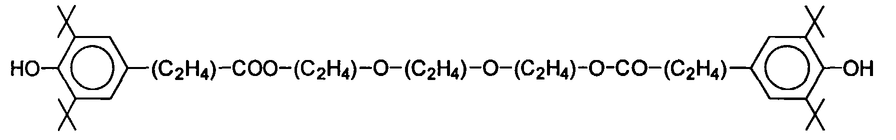

Es wurde im wesentlichen wie in Beispiel 1 verfahren, nur daß Triethylenglykol anstelle des Diethylenglykols und 3,5-Di-(tert.-butyl)-4-hydroxyphenyl]-propionsäure anstelle 3-(tert.-Butyl)-4-hydroxy-5- methylphenyl]-propionsäure verwendet wurde.
Ausbeute: 18,1 g weißes, kristallines Produkt
¹H-NMR: Struktur bestätigt

### Vergleichsbeispiel 5 (V5)

### Diethylenglykol-bis-[3-(3,5-di-(tert.-butyl)-4-hydroxyphenyl]-propionat]

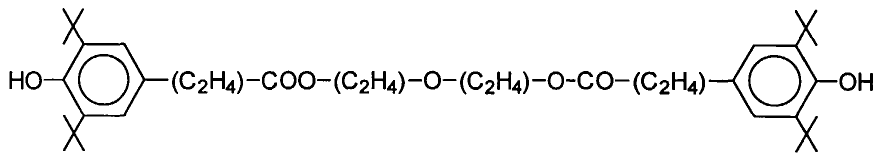

Es wurde im wesentlichen wie in Beispiel 1 verfahren, nur daß 3,5-Di-(tert.-butyl)-4-hydroxyphenyl]-propionsäure anstelle 3-(tert.-Butyl)-4-hydroxy-5- methylphenyl]-propionsäure verwendet wurde.
Ausbeute: 28,9 g viskoses Produkt
¹H-NMR: Struktur bestätigt

### Allgemeine Versuchsvorschrift:

Bei dem Beispiel B1 und den Vergleichsversuchen V2 bis V5 wurde jeweils ein thermisch nicht abgebautes Polyoxymethylen-Copolymerisat (MVR = 2-3 cm³/10 Minuten; ermittelt nach ISO 1133 bei 190°C und einer Auflagekraft von 2,16 kg), welches aus einer Mischung aus 97,3 Gew.% Trioxan und 2,7 Gew.% Butandiolformal hergestellt worden war und welches noch ungefähr 5 Gew.% nicht umgesetztes Trioxan und ungefähr 3 Gew.% thermisch instabiles Formaldehydaddukt enthielt, mit unterschiedlichen Mengen an Zusatzstoffen (B) und Additiven (C) zur thermischen Stabilisierung in einem Trockenmischer bei einer Temperatur von 23°C gemischt. Die resultierenden vorgefertigten Mischungen wurden bei einer Temperatur von 23°C in einen Doppelschneckenextruder mit Entgasungsvorrichtung (Typ ZSK 28 der Firma Werner und Pfleiderer, Stuttgart) eingebracht, bei 180 bis 250°C homogenisiert und entgast, wonach das homogenisierte Gemisch durch eine Düse als Strang ausgepreßt und granuliert wurde.

Zur Prüfung der Thermostabilität und Verfärbungsneigung wurden bestimmt:
GV(N₂): Der Gewichtsverlust in Gew.% einer Probe aus 1,2 g Granulat bei zweistündigem Erhitzen auf 222°C unter Stickstoff;
GV(Luft): Gewichtsverlust in Gew.% einer Probe aus 1,2 g Granulat bei zwei- und/oder sechsstündigem Erhitzen auf 222°C unter Luft;
MVR: ermittelt nach ISO 1133 bei 190°C und einer Auflagekraft von 2,16 kg;
CieLab-Werte: Farbmetrische Bestimmung der Farbabstände L*, a* und b* (CieLab-Farbkordinaten) des Granulates zum Zeitpunkt 2 Stunden nach der Extrusion und nach 500 Stunden Lagerung in einem Umlufttrockenschrank bei 140°C gemäß DIN 6174 (ASTM E 1347).

Die Tabelle 1 gibt einen Überblick über die hergestellten erfindungsgemäßen und nicht erfindungsgemäßen Formmassen. Die Ergebnisse der vorstehend genannten Tests werden in der Tabelle 2 zusammengefaßt.

### 3) Experimentelle Daten

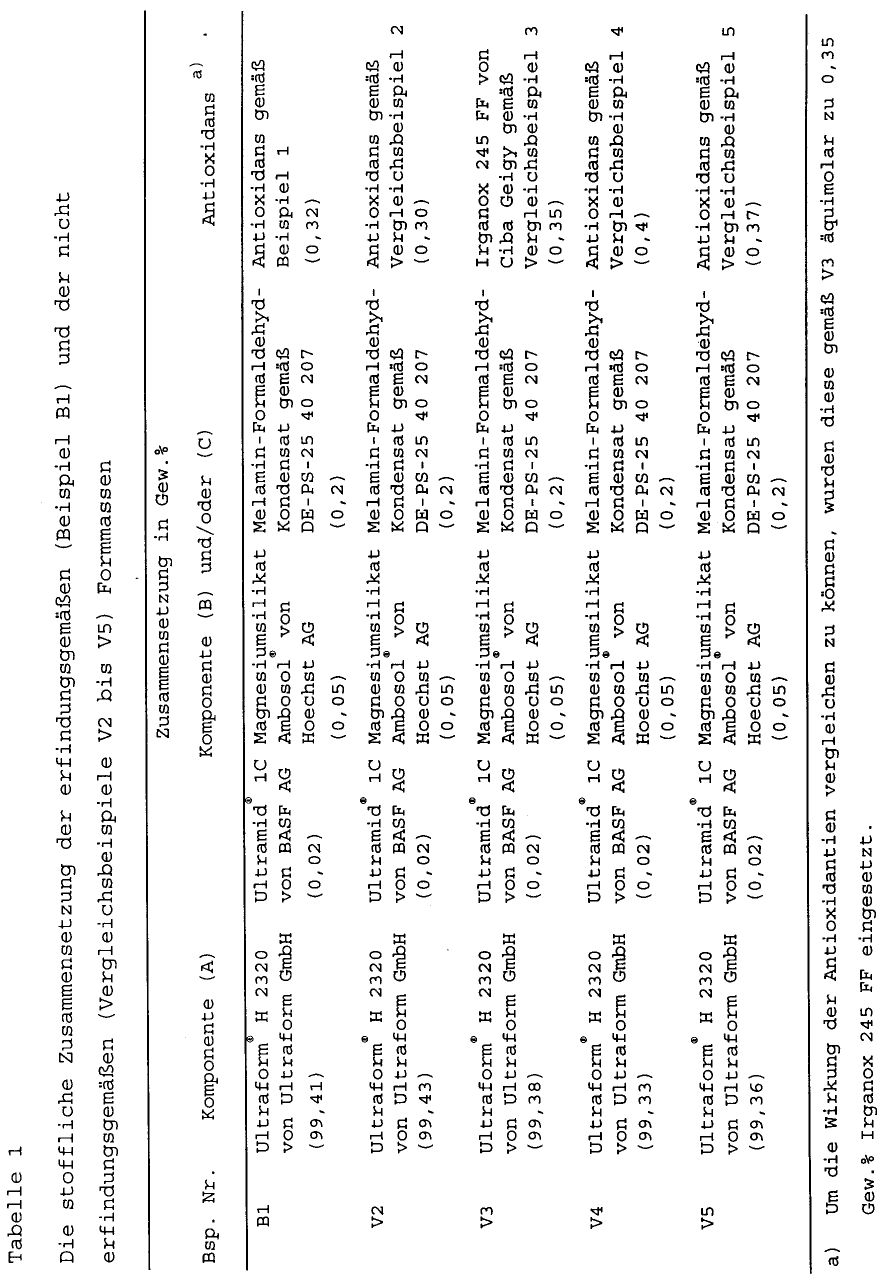

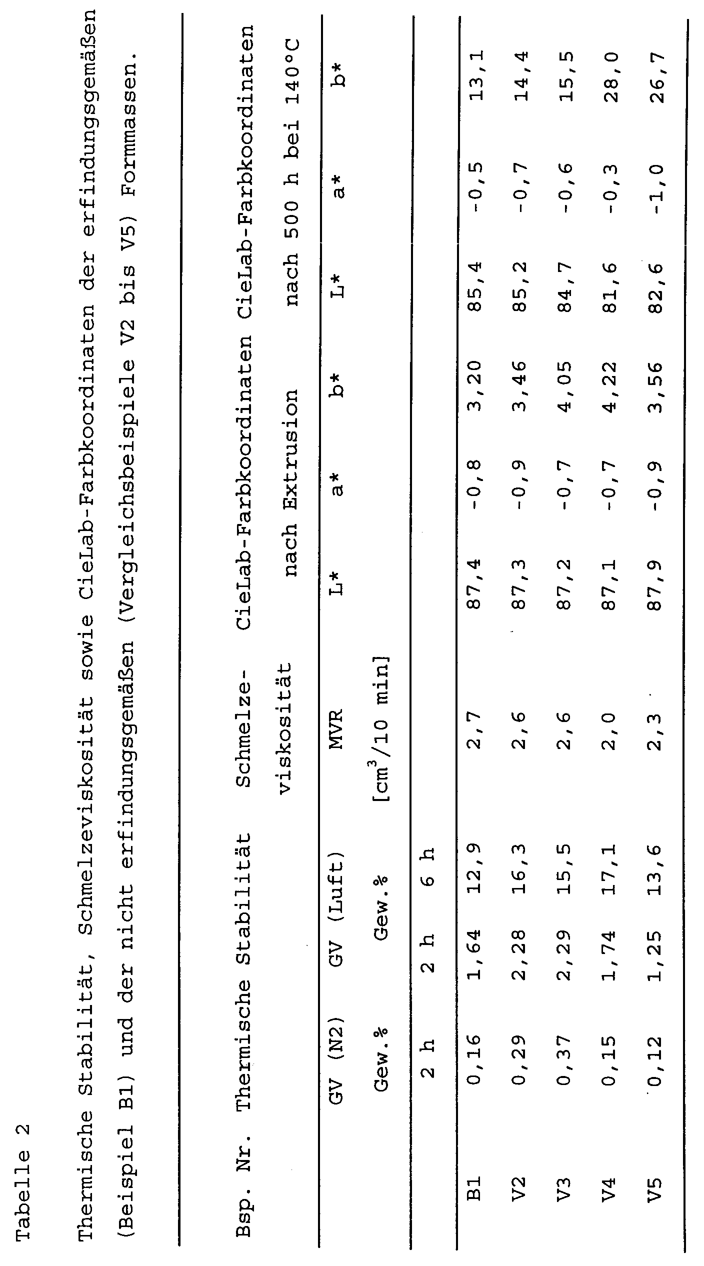

Aus den Daten der Tabellen 1 und 2 ist ableitbar, daß die thermische Stabilität der mit dem Antioxidans gemäß der Erfindung stabilisierten POM-Mischungen gleich gut oder besser ist als derjenigen POM's, die mit den Vergleichsantioxidantien V2 - V5 stabilisiert sind. Insbesondere zeigt das erfindungsgemäß stabilisierte Beispiel 1 den geringsten Gewichtsverlust unter Luft nach 6 Stunden. Da, wo eine nur in etwa gleich gute thermische Stabilisierung erreicht wird, ist dann jedoch die Verfärbung (CieLab-Farbkoordinaten), insbesondere die Gelbverfärbung (b*-Wert) deutlich geringer. Dieser Effekt ist nicht nur am Granulat direkt nach der Extrusion sondern insbesondere nach 500 stündiger Wärmelagerung des Granulates bei 140°C erkennbar. Darüber hinaus ist die Helligkeit (L*-Wert) des erfindungsgemäß stabilisierten Granulates nach Wärmelagerung deutlich besser als bei den Vergleichsbeispielen V2 - V5. Man kann somit bei dem erfindungsgemäß stabilisierten Beispiel behaupten, ein POM mit verbesserten Wärmealterungstabilität vorliegen zu haben.

Ferner liegt der Zahlenwert des MVR des erfindungsgemäßen Beispiels nur geringfügig über dem der Vergleichsbeispiele, so daß man hier nicht von einem nachteiligem Effekt sprechen kann.

## Patentansprüche

1. Verfahren zum Stabilisieren von POM, das üblicherweise der oxidativen Zersetzung unterliegt,
**gekennzeichnet durch**
die Vermischung von POM mit einer wirksamen Menge eines sterisch gehinderten Phenolesters eines Dialkylenglykols der allgemeinen Formel I
